# EUROPÄISCHE PATENTANMELDUNG

(11) **EP 3 072 831 A1**
(43) Veröffentlichungstag der Anmeldung: **28.09.2016**
(21) Anmeldenummer: 15160375.0
(22) Anmeldetag: 23.03.2015
(51) Int. Cl.: B65D 77/20

(54) **Wiederverschließbare Verpackung**

(71) Anmelder: MULTIVAC Sepp Haggenmüller SE & Co. KG, 87787 Wolfertschwenden (DE)
(72) Erfinder: Spix, Guido, 89079 Ulm (DE)
(74) Vertreter: Grünecker Patent- und Rechtsanwälte PartG mbB

(57) **Zusammenfassung**

Es wird eine Verpackung (1) beschrieben, die einen Behälter (3) aus einem Kunststoffmaterial umfasst, der eine Öffnung (4) aufweist, die von einem Flanschabschnitt (9) umrandet ist, der wiederum eine Flanschaußenkante (8) und eine innere Siegelfläche (10) zum Ansiegeln einer Deckelfolie (11) aufweist. Dabei definiert die Öffnung (4) ein Öffnungsfläche (4a). Die Verpackung (1) weist desweiteren einen Rahmen (2) auf, der eine Rahmeninnenkante (7) und eine äußere Siegelfläche (12) zum Ansiegeln der Deckelfolie (11) aufweist. Die Verpackung zeichnet sich dadurch aus, dass in einem Ausgangszustand zwischen der Flanschaußenkante (8) und der Rahmeninnenkante (7) eine Perforationslinie (6) vorgesehen ist, die Trennbereiche (13) und Verbindungsabschnitte (14) umfasst, wobei im Ausgangszustand der Rahmen (2) und der Flanschabschnitt (9) durch die intakten Verbindungsabschnitte (14) relativ zueinander festgelegt und in Draufsicht überlappungsfrei zueinander ausgerichtet sind. Die Verpackung (1) zeichnet sich desweiteren dadurch aus, dass in einem Wiederverschlusszustand der Rahmen (2) und der Flanschabschnitt (9) nach Durchtrennung der Verbindungsabschnitte (14) relativ zueinander um eine senkrecht zu der Öffnungsfläche (4a) verlaufende Achse (5) gegenüber dem Ausgangszustand um einen vorbestimmten Winkel (W) relativ zueinander verdreht sind und der Rahmen (2) und der Flanschabschnitt (9) in Draufsicht zumindest teilweise überlappen. Dabei verläuft die Rahmeninnenkante (7) sowohl im Ausgangszustand als auch im Wiederverschlusszustand vollständig außerhalb der Öffnungsfläche (4a).

## Beschreibung

Die Erfindung bezieht sich auf eine Verpackung gemäß dem Oberbegriff des Anspruchs 1.

Solche Verpackungen werden z.B. zur Aufbewahrung und zum Transport von Lebensmitteln benutzt. Dabei sollen diese von der Produktion bis zum Verkauf sicher, beispielsweise luftdicht, aufbewahrt werden. Nach dem Verkauf soll ein Verbraucher dazu in die Lage versetzt werden, die Verpackung nach dem erstmaligen Öffnen wieder zu verschließen, um eine geeignete Aufbewahrung für nicht verbrauchte Lebensmittel zu gewährleisten. Um solche Verpackungen nach dem Einfüllen eines Lebensmittelprodukts in einen Behälter sicher zu verschließen, ist es üblich, die Öffnungen des Behälters mit einer Deckelfolie abzudecken und diese mit dem Behälter zu versiegeln oder zu verschweißen.

Da solche Deckelfolien nach dem erstmaligen Öffnen durch den Verbraucher nicht mehr ohne weiteres zur zweckmäßigen Abdeckung des Behälters verwendet werden können, werden in bekannten Verpackungen Rahmen verwendet, die ebenfalls mit der Deckelfolie verschweißt werden. Beim erstmaligen Öffnen durch den Verbraucher wird die Verschweißung zwischen Behälter und Deckelfolie gelöst, während die Verschweißung zwischen Rahmen und Deckelfolie erhalten bleibt. Auf diese Weise wird die Deckelfolie ausreichend stabilisiert, so dass sie mitsamt dem Rahmen zum Wiederverschließen des Behälters verwendet werden kann.

Der dadurch gewonnene größere Kundennutzen geht jedoch mit Herausforderungen bei der industriellen Produktion sowie bei der industriellen Abfüllung von Lebensmittelprodukten in die Behälter einher. In der WO 2005/03997 A1 ist z.B. ein wiederverschließbarer Behälter offenbart, bei dem Rahmen und Behälter separat hergestellt werden, der Rahmen auf dem Behälter platziert wird und dann die Deckelfolie aufgelegt und mit dem Behälter und dem Rahmen verbunden wird. Dies stellt einen erheblichen Mehraufwand dar, da der Rahmen genau in die dafür vorgesehene Position gebracht werden muss.

Die WO 2012/087114 A1 offenbart eine Verpackung und ein zugehöriges Produktionsverfahren, die diese Probleme lindern sollen. Dazu wird ein Spritzgussbehälter vorgeschlagen, der zunächst integral mit dem Rahmen gefertigt wird. Die beiden Komponenten sind durch eine dünne filmartige Sollbruchstelle miteinander verbunden. Diese wird beim Andrücken der Deckelfolie an dem Behälter durchtrennt, so dass der Behälter und der Rahmen nur noch über die Deckelfolie verbunden sind Zwischen dem Behälter und dem Rahmen ist außerdem eine Schnappverbindung vorgesehen. Nachteilig an dieser Lösung ist jedoch, dass die vorgeschlagene Sollbruchstelle hohe Anforderungen an den Fertigungsprozess stellt, da Abweichungen zu Brüchen oder Rissen an unerwünschten Stellen des Behälters führen können.

Aufgabe der Erfindung ist es, eine Verpackung anzugeben, die mit konstruktiv möglichst einfachen Mitteln eine einfachere, effizientere und robustere Produktion ermöglicht.

Diese Aufgabe wird gelöst durch eine Verpackung mit den Merkmale des Anspruchs 1. Vorteilhafte Weiterbildungen sind in den Unteransprüchen angegeben.

Die erfindungsgemäße Verpackung umfasst einen Behälter aus einem Kunststoffmaterial und mit einer Öffnung, die von einem Flanschabschnitt umrandet ist, der eine Flanschaußenkante und eine innere Siegelfläche zum Ansiegeln einer Deckelfolie aufweist. Dabei definiert die Öffnung eine Öffnungsfläche. Die Verpackung weist desweiteren einen Rahmen auf, der eine Rahmeninnenkante und eine äußere Siegelfläche zum Ansiegeln der Deckelfolie aufweist. Die Erfindung zeichnet sich dadurch aus, dass in einem Ausgangszustand zwischen der Flanschaußenkante und der Rahmeninnenkante eine Perforationslinie vorgesehen ist, die Trennbereiche und Verbindungsabschnitte umfasst. Im Ausgangszustand sind der Rahmen und der Flanschabschnitt durch die intakten Verbindungsabschnitte relativ zueinander festgelegt und in Draufsicht überlappungsfrei zueinander ausgerichtet. Die Erfindung zeichnet sich weiterhin dadurch aus, dass in einem Wiederverschlusszustand der Rahmen und der Flanschabschnitt nach Durchtrennung der Verbindungsabschnitte relativ zueinander um eine senkrecht zu der Öffnungsfläche. verlaufende Achse gegenüber dem Ausgangszustand um einen vorbestimmten Winkel relativ zueinander verdreht sind. In diesem Wiederverschlusszustand überlappen der Rahmen und der Flanschabschnitt zumindest teilweise. Die Rahmeninnenkante verläuft dabei sowohl im Ausgangszustand als auch im Wiederverschlusszustand vollständig außerhalb der Öffnungsfläche.

Die erfindungsgemäße Konfiguration weist den Vorteil auf, dass die Perforationslinie sehr einfach in den Behälter einzubringen ist, beispielsweise durch Stanzen oder Schneiden. Bei den Trennbereichen der Perforationslinie kann es sich um Bereiche handeln, in denen zwischen der Rahmeninnenkante und der Flanschaußenkante kein Material vorgesehen ist. Bei den Verbindungsbereichen kann es sich um Bereiche handeln, in denen zwischen der Flanschaußenkante und der Rahmeninnenkante noch Kunststoffmaterial, aus dem der Behälter gefertigt ist, vorhanden ist, beispielsweise Stege oder andere Materialbrücken. Sind diese noch intakt, können sie die Rahmeninnenkante und die Flanschaußenkante und damit den Flanschabschnitt und den Rahmen integral miteinander verbinden. Der Rahmen und der Behälter bzw. der Flanschabschnitt werden so in dem Ausgangszustand gehalten, in dem der Flanschabschnitt und der Rahmen in Draufsicht überlappungsfrei zueinander ausgerichtet sind. Unter Draufsicht ist in diesem Fall eine Ansicht mit Blickrichtung entlang der senkrecht zu der Öffnungsfläche verlaufenden Achse zu verstehen. Unter einer überlappungsfreien Ausrichtung ist hier zu verstehen, dass die Konturen des Flanschabschnitts und des Rahmens sich in dieser Draufsicht nicht schneiden, wohl aber berühren können. Nach einer Trennung der Verbindungsabschnitte, beispielsweise beim erstmaligen Öffnen der Verpackung durch den Verbraucher, kann der Wiederverschlusszustand hergestellt werden, indem der Behälter und der Rahmen relativ zueinander um die senkrecht zu der Öffnungsfläche verlaufende Achse gedreht werden. In dem Wiederverschlusszustand überlappen sich der Flanschabschnitt und der Rahmen in der Draufsicht zumindest teilweise, d.h. die Konturen des Flanschabschnitts und der Rahmeninnenkante können sich schneiden. Dadurch kann eine Schnappverbindung zwischen einem aus dem Rahmen und der Deckelfolie bestehenden Deckel und dem Flanschabschnitt entstehen.

Die Perforationslinie kann beispielsweise zwischen der inneren und der äußeren Siegelfläche verlaufen.

In einer weiteren Variante kann die Perforationslinie parallel zu einer inneren Siegellinie der inneren Siegelfläche und/oder parallel zu einer äußeren Siegellinie der äußeren Siegelfläche verlaufen. Unter einer inneren Siegellinie ist eine Linie zu verstehen, die den Verlauf der inneren Siegelfläche beschreibt, z.B. eine Linie, die stets im gleichen Abstand zu den Rändern der inneren Siegelfläche verläuft. Unter einer äußeren Siegellinie ist eine entsprechende Linie zur Beschreibung des Verlaufs der äußeren Siegelfläche zu verstehen.

Es ist jedoch ebenso denkbar, dass ein Abstand zwischen der Perforationslinie und der inneren Siegellinie der inneren Siegelfläche und/oder ein Abstand zwischen der Perforationslinie und der äußeren Siegellinie der äußeren Siegelfläche entlang der Perforationslinie variiert.

In einer weiteren Variante kann eine äußere Kontur der Öffnung parallel zu der Perforationslinie verlaufen.

Vorteilhaft ist es, wenn die Verbindung zwischen der Deckelfolie und der äußeren Siegelfläche einen höheren Aufreißwiderstand aufweist als die Verbindung zwischen der Deckelfolie und der inneren Siegelfläche. Auf diese Weise kann gewährleistet werden, dass der Verbraucher beim Öffnen die Verbindung zwischen der Deckelfolie und dem Behälter löst und nicht etwa die Verbindung zwischen dem Rahmen und der Deckelfolie. Letzteres wäre unvorteilhaft, da die Wiederverschließfunktion so nicht mehr gegeben wäre. Unter Aufreißwiderstand ist hier die Stabilität der Verbindung zwischen den jeweiligen Komponenten zu verstehen. Diese kann durch verschiedene Maßnahmen beeinflusst werden. Es sind z.B. geometrische Unterschiede zwischen den Siegelfläche vorstellbar oder auch unterschiedliche Siegeldrücke, Siegeltemperaturen und/oder Siegelzeiten (-dauern). Zum Beispiel können in einem Fall, in dem die Siegelflächen jeweils als um die Öffnung herumlaufende Streifen bzw. Linien ausgeführt sind, unterschiedliche Breiten vorgesehen sein. Ebenso ist es jedoch denkbar, dass Aufreißhilfen an der Verbindung zwischen der Deckelfolie und der inneren Siegelfläche vorgesehen sind, wie z.B. spitz zulaufende Formen der Siegelung.

Die Perforationslinie kann auf einer Ebene liegen, die planparallel zu der Öffnungsfläche verläuft. Auf diese Art und Weise könnte die Fertigung weiter vereinfacht werden, z.B. durch ein Werkzeug, das gleichzeitig den Behälter formt und die Perforationslinie in das Werkstück einbringt.

In einer Variante können die innere und die äußere Siegelfläche im Ausgangszustand auf ein und derselben Ebene liegen. Dies vereinfacht das Aufsiegeln der Deckelfolie, insbesondere im Vergleich zur WO 2012/087114 A1, in der zwei verschiedene Siegelflächen auf zwei unterschiedlichen Höhen vorgesehen sind, so dass zum Ansiegeln der Deckelfolie ein komplexeres Gegenhaltewerkzeug erforderlich ist.

Die Erfindung bezieht sich auf einen Behälter der vorstehend beschriebenen Art. Im Folgenden werden zwei vorteilhafte Ausführungsbeispiele anhand von Zeichnungen erläutert.
- Fig. 1: zeigt eine Draufsicht einer erfindungsgemäßen Verpackung.
- Fig. 2a: zeigt den Rahmen der erfindungsgemäßen Verpackung aus Fig. 1 ebenfalls in einer Draufsicht.
- Fig. 2b: zeigt den Behälter der erfindungsgemäßen Verpackung aus Fig. 1 in einer Draufsicht ohne den Rahmen.
- Fig. 3a: zeigt wiederum den Rahmen, wie in Fig. 2a.
- Fig. 3b: zeigt die gleiche Draufsicht, wie Fig. 2b mit dem Unterschied, dass der Behälter um 180° rotiert wurde.
- Fig. 4: zeigt den Behälter und den Rahmen in der Ausrichtung zueinander aus den Fig. 3a und 3b im Wiederverschlusszustand.
- Fig. 5a und 5b: zeigen ähnlich den Figuren 2a und 2b, einen Rahmen und einen Behälter einer weiteren erfindungsgemäßen Verpackung gemäß einem zweiten Ausführungsbeispiel.
- Fig. 6: zeigt den Rahmen und den Behälter aus dem zweiten Ausführungsbeispiel aus Fig. 5a und 5b im Widerverschlusszustand, in dem Rahmen und Behälter relativ zueinander um 90° gedreht wurden.
- Fig. 7a und 7b: zeigen mit Deckelfolie verschlossene Verpackungen gemäß dem ersten und dem zweiten Ausführungsbeispiel in einer perspektivischen Ansicht.

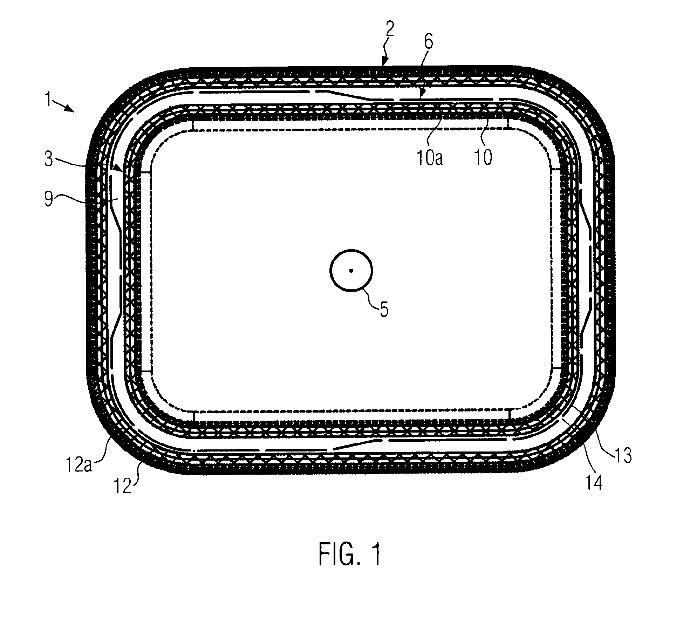

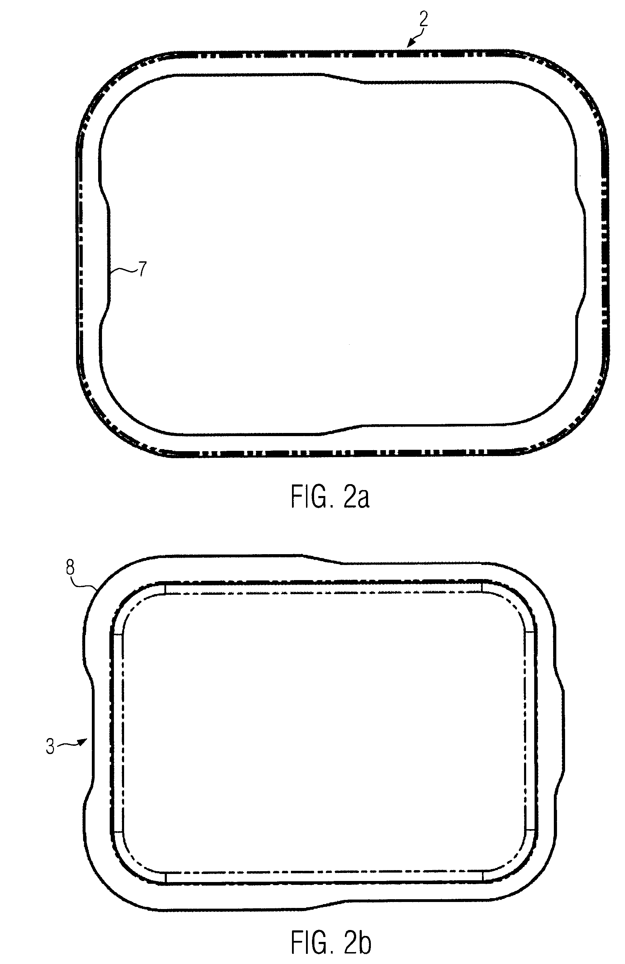

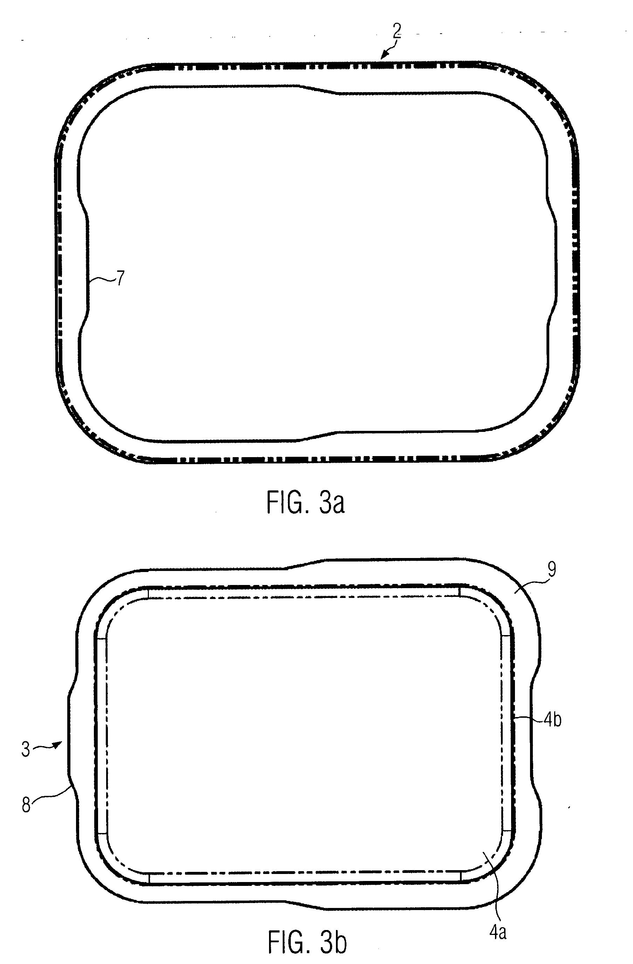

Figur 1 ist eine Draufsicht auf eine erfindungsgemäße Verpackung 1, die einen Rahmen 2 und einen Behälter 3 umfasst. Eine Öffnung 4 des Behälters 3 verläuft im Ausführungsbeispiel in der Zeichenebene. Sie definiert eine ebenfalls in der Zeichnungsebene liegende Öffnungsfläche 4a und weist eine Kontur 4b auf (siehe Fig. 3b). Senkrecht zur Öffnungsfläche 4a steht eine Achse 5, die folglich auch senkrecht zur Zeichenebene verläuft. Die Öffnung 4 ist von einem Flanschabschnitt 9 umrandet. In Fig. 1 ist eine Perforationslinie 6 zu erkennen, die sich in einem in Fig. 1 dargestellten Ausgangszustand zwischen einer Rahmeninnenkante 7 und einer Flanschaußenkante 8 des Flanschabschnitts 9 erstreckt (siehe Figur 2a und 2b).

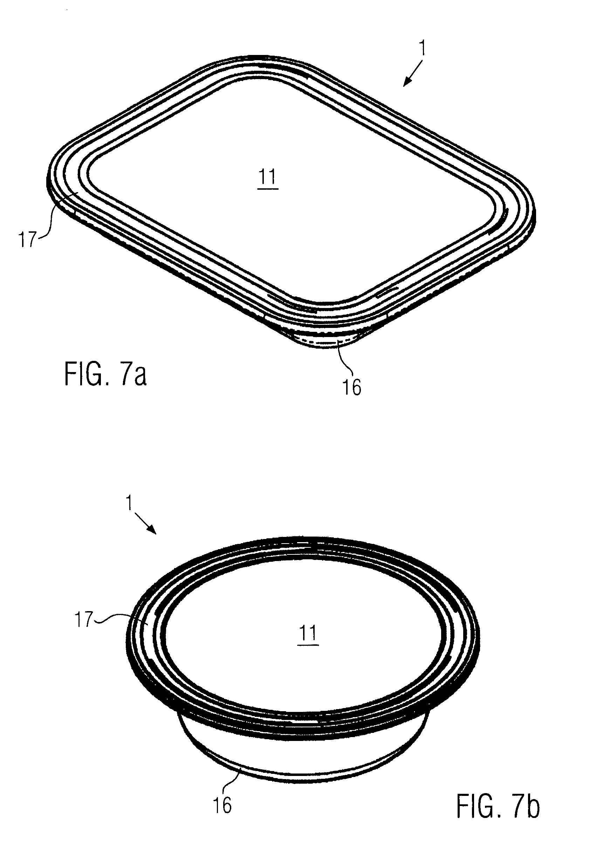

Der Flanschabschnitt 9 umfasst außerdem eine innere Siegelfläche 10 zum Ansiegeln einer in der Zeichnungsebene verlaufenden Deckelfolie 11 (siehe auch Fig. 7a). Die Deckelfolie 11 kann außerdem an eine an dem Rahmen 2 vorgesehene äußere Siegelfläche 12 angesiegelt werden. Der Verlauf der inneren Siegelfläche 10 kann durch eine innere Siegellinie 10a beschrieben werden. Auf ähnliche Art kann der Verlauf der äußeren Siegelfläche 12 durch eine äußere Siegellinie 12a beschrieben werden.

Die Perforationslinie 6 weist Trennbereiche 13 (schwarz dargestellt) und Verbindungsabschnitte 14 (weiß) auf. An den Verbindungsabschnitten 14 ist die Rahmeninnenkante 7 mit der Flanschaußenkante 8 durch Material verbunden, beispielsweise in Form von Stegen. Im Ausgangszustand A sind die Verbindungsabschnitte 14 intakt. Dadurch werden der Rahmen 2 und der Behälter 3 in einer festen Orientierung zueinander festgelegt. Im Ausgangszustand sind der Rahmen 2 und der Flanschabschnitt 9 überlappungsfrei zueinander ausgerichtet.

In den Fig. 2a und 2b sind der Rahmen 2 und der Behälter 3 im Ausgangszustand jeweils einzeln dargestellt, um die Konturen der Rahmeninnenkante 7 und der Flanschaußenkante 8 zu verdeutlichen. In den Fig. 3a und 3b ist eine ähnliche Ansicht zu sehen, in der jedoch der Rahmen 2 und der Behälter 3 in einem Wiederverschlusszustand zueinander ausgerichtet sind. Der Wiederverschlusszustand kann erst nach Durchtrennen der Verbindungsabschnitte 14 hergestellt werden. Im vorliegenden Ausführungsbeispiel wurde der Behälter 3 um einen Winkel W von 180° um die Achse 5 gedreht. Es sollte jedoch klar sein, dass jede beliebige Drehung des Rahmens 2 und des Behälters 3 relativ zueinander um die Achse 5 möglich sein kann, um den Wiederverschlusszustand herzustellen.

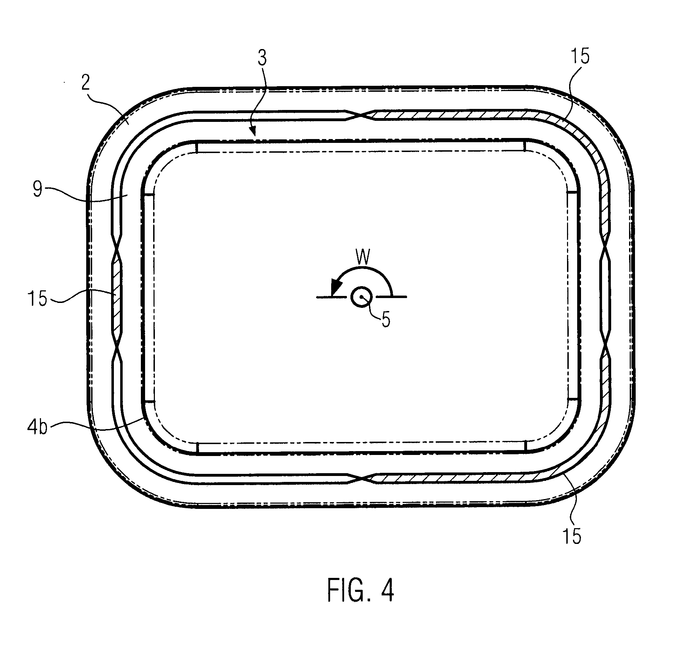

In Fig. 4 ist eine Draufsicht des Wiederverschlusszustands der Verpackung 1 dargestellt. Diesmal sind auch wieder sowohl der Rahmen 2 als auch der Behälter 3 dargestellt. So wird deutlich, dass der Rahmen 2 und der Flanschabschnitt 9 teilweise überlappen. Im vorliegenden Ausführungsbeispiel ist dies in schraffierten Überlappungsbereichen 15 der Fall. In diesem Zusammenhang ist es wichtig, darauf hinzuweisen, dass der Wiederverschlusszustand nicht etwa durch das Maß des Winkels W, um den der Rahmen 2 und der Behälter 3 relativ zueinander verdreht werden, definiert ist. Vielmehr ist die mindestens teilweise Überlappung des Rahmens 2 mit dem Flanschabschnitt 9 kennzeichnend für den Wiederverschlusszustand.

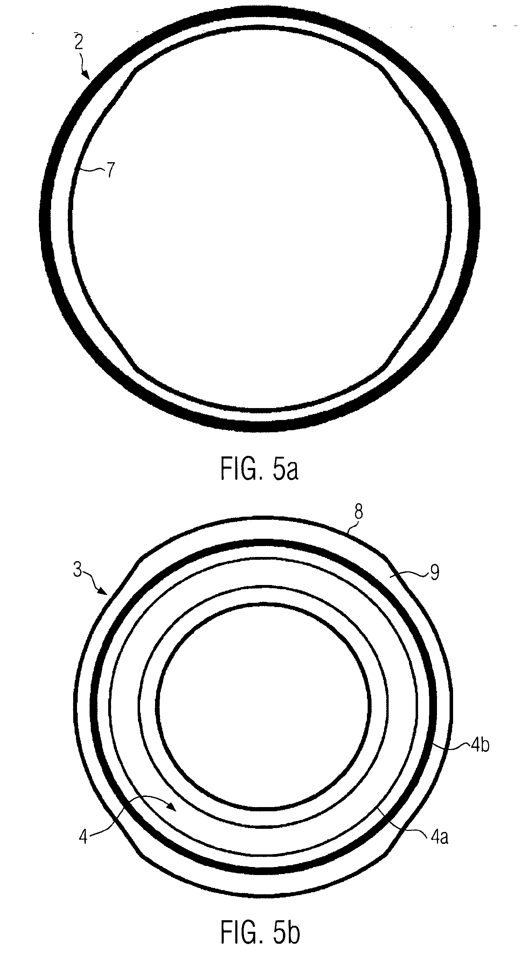

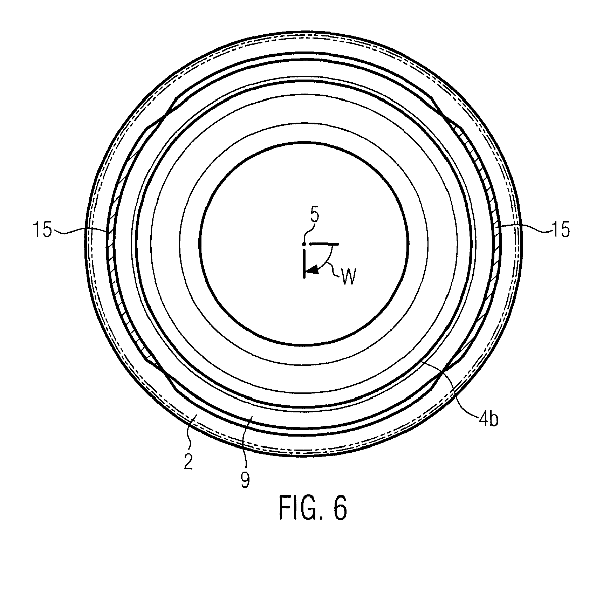

In den Fig. 5a und 5b ist ein zweites Ausführungsbeispiel der Erfindung dargestellt. Analog den Fig. 2a und 2b sind der Rahmen 2 und der Behälter 3 zur Verdeutlichung der Kontur der Rahmeninnenkante 7 und der Flanschaußenkante 8 separat dargestellt. Der Wiederverschlusszustand kann hier ebenfalls durch eine Drehung des Rahmens 2 und des Behälters 3 relativ zueinander um die Achse 5 erreicht werden. Im zweiten Ausführungsbeispiel ist dazu allerdings lediglich eine Verdrehung um einen Winkel W von 90° relativ zueinander erforderlich. Dargestellt ist dies in Figur 6.

Wie im ersten Ausführungsbeispiel können der Rahmen 2 und der Behälter 3 beim Wiederverschließen der Verpackung zunächst relativ zueinander verdreht werden und dann der Rahmen 2 mit dem Flanschabschnitt 9 in Eingriff gebracht werden. Die im Wesentlichen kreisrunde Form des zweiten Ausführungsbeispiels ermöglicht es zusätzlich, dass der Rahmen 2 zunächst in der Orientierung des Ausgangszustands auf den Behälter 3 aufgesetzt wird und erst dann der Rahmen 2 und der Behälter 3 relativ zueinander verdreht werden, um so den Rahmen 2 mit dem Flanschabschnitt 9 in Eingriff zu bringen. Demnach ist also ein bajonettartiger Wiederverschlussmechanismus möglich.

Die Herstellung der Verpackung kann folgendermaßen ablaufen: Zunächst werden der Behälter 3 und der Rahmen 2 integral miteinander verbunden als vorgefertigtes Produkt geformt. Dazu wird eine Vertiefung 16 geformt, die an der Öffnung 4 geöffnet ist. Desweiteren wird ein Flanschteil 17 geformt, aus dem später der Flanschabschnitt 9 und der Rahmen 2 gebildet werden können. Auf dem Flanschteil 17 können desweiteren die innere Siegelfläche 10 und die äußere Siegelfläche 12 vorgesehen sein. Diese können beispielsweise als gegenüber dem übrigen Flanschteil 17 erhöhte Abschnitte ausgeführt sein, oder aber als Abschnitte mit bestimmten Oberflächeneigenschaften. Auch das Auftragen eines Bindemittels, z.B. Klebstoff, kann zur Ausbildung der inneren und äußeren Siegelfläche 10 oder 12 dienen. Die innere und die äußere Siegelfläche 10, 12 können auf die gleiche Art ausgebildet sein oder aber auf unterschiedliche der vorstehend beschriebenen Arten.

Durch die Einbringung der Perforationslinie 6 in den Flanschteil 17 können der Rahmen 2 und der Flanschabschnitt 9 teilweise voneinander getrennt werden. Dies kann beispielsweise dadurch geschehen, dass der Flanschteil 17 an den Trennbereichen 13 durchtrennt wird. Die Verbindungsabschnitte 14 können dabei intakt gelassen werden. Die oben beschriebenen Herstellungsschritte können vorteilhafterweise in ein und demselben Arbeitstakt durchgeführt werden, in beliebig vielen mehreren Arbeitstakten in beliebiger Gruppierung aufgeteilt werden, oder aber jeder Schritt in einem einzelnen Arbeitstakt vorgesehen sein.

Die so vorgefertigte, noch unverschlossene Verpackung 1 kann dann an einen Lebensmittelproduzenten geliefert werden. Dort kann die Verpackung mit einem Lebensmittel befüllt werden. Darauffolgend kann die Deckelfolie 11 an die innere und äußere Siegelfläche 10, 12 angesiegelt werden, um die Verpackung 1 zu verschließen. Ein Verbraucher des in der Verpackung 1 enthaltenen Lebensmittelproduktes kann dann beim Öffnen der Verpackung 1 sowohl die Verbindungsabschnitte 14 als auch die Verbindung zwischen der Deckelfolie 11 und der inneren Siegelfläche 10 trennen. Dadurch erhält er einen formstabilen Deckel, der den Rahmen 2 und die Deckelfolie 11 umfassen kann, und den er durch Herstellen des Wiederverschlusszustands wieder mit dem Behälter 3 verbinden kann, um den Behälter 3 zu verschließen.

Zur weiteren Veranschaulichung sind in den Figuren 7a und 7b dreidimensionale Ansichten der Behälter 3 gemäß den beiden vorstehend beschriebenen Ausführungsbeispielen dargestellt.

## Patentansprüche

1. Verpackung (1), umfassend:
einen Behälter (3) aus einem Kunststoffmaterial und mit einer Öffnung (4), die von einem Flanschabschnitt (9) umrandet ist, der eine Flanschaußenkante (8) und eine innere Siegelfläche (10) zum Ansiegeln einer Deckelfolie (11) aufweist, wobei die Öffnung (4) eine Öffnungsfläche (4a) definiert, und
einen Rahmen (2), der eine Rahmeninnenkante (7) und eine äußere Siegelfläche (12) zum Ansiegeln der Deckelfolie (11) aufweist,
**dadurch gekennzeichnet, dass** in einem Ausgangszustand zwischen der Flanschaußenkante (8) und der Rahmeninnenkante (7) eine Perforationslinie (6) vorgesehen ist,
die Trennbereiche (13) und Verbindungsabschnitte (14) umfasst, wobei im Ausgangszustand der Rahmen (2) und der Flanschabschnitt (9) durch die intakten Verbindungsabschnitte (14) relativ zueinander festgelegt und in Draufsicht überlappungsfrei zueinander ausgerichtet sind, und
dass in einem Wiederverschlusszustand der Rahmen (2) und der Flanschabschnitt (9) nach Durchtrennung der Verbindungsabschnitte (14) relativ zueinander um eine senkrecht zu der Öffnungsfläche (4a) verlaufende Achse (5) gegenüber dem Ausgangszustand um einen vorbestimmten Winkel W relativ zueinander verdreht sind und der Rahmen (2) und der Flanschabschnitt (9) in Draufsicht zumindest teilweise überlappen,
wobei die Rahmeninnenkante (7) sowohl im Ausgangszustand als auch im Wiederverschlusszustand vollständig außerhalb der Öffnungsfläche (4a) verläuft.

2. Verpackung nach Anspruch 1, **dadurch gekennzeichnet, dass** die Perforationslinie (6) zwischen der inneren und der äußeren Siegelfläche verläuft (10, 12).

3. Verpackung nach Anspruch 2, **dadurch gekennzeichnet, dass** die Perforationslinie (6) parallel zu einer inneren Siegellinie (10a) der inneren Siegelfläche (10) und/oder parallel zu einer äußeren Siegellinie (12a) der äußeren Siegelfläche (12) verläuft.

4. Verpackung nach Anspruch 2, **dadurch gekennzeichnet, dass** ein Abstand zwischen der Perforationslinie (6) und einer inneren Siegellinie (10a) der inneren Siegelfläche (10) und/oder ein Abstand zwischen der Perforationslinie (6) und einer äußeren Siegellinie (12a) der äußeren Siegelfläche (12) entlang der Perforationslinie (6) variiert.

5. Verpackung nach einem der vorangehenden Ansprüche, **dadurch gekennzeichnet, dass** eine äußere Kontur (4b) der Öffnung (4) parallel zu der Perforationslinie (6) verläuft.

6. Verpackung nach einem der vorangehenden Ansprüche, **dadurch gekennzeichnet, dass** die Verbindung zwischen der Deckelfolie (11) und der äußeren Siegelfläche (12) einen höheren Aufreißwiderstand aufweist als die Verbindung zwischen der Deckelfolie (11) und der inneren Siegelfläche (10).

7. Verpackung nach einem der vorangehenden Ansprüche, **dadurch gekennzeichnet, dass** die Perforationslinie (6) auf einer Ebene liegt, die parallel zu der Öffnungsfläche (4) verläuft.
